# EUROPEAN PATENT SPECIFICATION

(11) **EP 2 380 927 B1**
(45) Date of publication and mention of the grant of the patent: **16.07.2014**
(21) Application number: 11161357.6
(22) Date of filing: 06.04.2011
(51) Int. Cl.: C08K 5/12

(54) **Redispersible polymer powders prepared from low carboxylation styrene butadiene-based latex**
Erneut dispergierbare Polymerpulver aus Latex auf Basis von niedrigcarboxyliertem Styrol-Butadien
Poudres de polymère redispersibles préparées à partir d'un latex à base de styrène butadiène à faible carboxylation

(30) Priority: 14.05.2010 US 334630 P; 20.04.2010 US 325925 P
(43) Date of publication of application: 26.10.2011
(73) Proprietor: Dow Global Technologies LLC, Midland, MI 48674 (US)
(72) Inventor: Kim-Habermehl, Linda H., Midland, MI (US); Ladika, Mladen, Midland, MI 48642 (US); Hong, Liang, Midland, MI 48640 (US)
(74) Representative: Buckley, Guy Julian

(56) References cited:
- WO-A1-00/17270
- WO-A1-01/62836
- WO-A1-99/48997
- WO-A1-03/004557
- WO-A2-01/92398
- DE-A1- 19 827 425
- DE-A1-102004 057 996
- US-A- 3 822 230

## Description

### FIELD OF THE INVENTION

The present invention relates to redispersible polymer powder compositions which are prepared from low carboxylation styrene butadiene copolymer latex having a large average particle size for use in cement compositions.

### BACKGROUND OF THE INVENTION

In construction applications, mortars may be prepared with cement, sand, and organic polymer. To reduce shipping costs, the polymer can be shipped and added in dry form as a redispersible polymer powder. Redispersible polymer powders improve the adhesion and flexibility of cement based tile adhesives. The powdered form of the polymer is generally produced by spray drying a liquid polymer composition to obtain a free flowing powder. To perform its function in the application formulation to which it is added, such as concrete, it is desired that in the application formulation the polymer powder is easily redispersible. Also, in preparing a redispersible polymer powder (RDP) from a latex or polymer dispersion by spray drying, a low viscosity polymer dispersion is desired to enable the use of higher solids content compositions for easier spray drying and lower pressure equipment for more efficient production of RDPs without loss of redispersibility. Lowering the amount of carboxylation of a latex polymer reduces the viscosity of the polymer dispersion, but can adversely affect redispersibility. Partially hydrolyzed polyvinyl alcohol (PVOH) is generally used as a protective colloid to improve the redispersibility of organic polymers. However, for effective redispersibility a large amount of PVOH is needed and it tends to adversely increase the viscosity of styrene butadiene polymer compositions or dispersions making it difficult to produce powders by spray drying. Generally, mortars which exhibit higher and faster heat flow characteristics are desired for quicker set times with lower viscosity for workability or ease of troweling during application.

U.S. Patent No. 3,822,230 to Nelson discloses a latex composition having an average particle diameter from about 500 Angstroms to about 10,000 Angstroms, preferably from about 1500 Angstroms to about 4,000 Angstroms which can be spray dried to a form a powdery product which is dispersible in water to form a reconstituted latex having approximately the same particle size as the original latex. However, additional formulation compounds having two vicinal carboxyl groups, such as the disodium salt of 1,2,3,6-tetrahydrophthalic acid, are required to provide water redispersibility; these add to the amount of carboxylation. US2008/0132624 discloses water-redispersible powders comprising water-insoluble film-forming base polymer(s) and one or more protective colloids.

Mortars formulated with the styrene butadiene redispersible polymer powders of the present invention exhibit an unexpectedly faster set time and unexpectedly lower rate of viscosity buildup relative to other SB RDPs, which is advantageous for workability or ease of troweling during application. Accordingly, the present invention solves the problem of viscosity buildup of the latex dispersion and PVOH composition in other known SB RDP compositions prior to spray drying and as well in use in known cement compositions containing other known SB RDPs, which permits the use of higher solids content compositions for spray drying and lower pressure equipment for more efficient production of RDPs without loss of redispersibility.

### SUMMARY OF THE INVENTION

The present invention is as set out in the accompanying claims. It provides a redispersible polymer powder (RDP) comprised of at least one water insoluble polymer prepared from at least one water insoluble, low carboxylation, large particle size, low Tg styrene butadiene (SB) copolymer latex and a colloidal stabilizer, e.g. polyvinyl alcohol (PVOH), without the need for a six-membered carbocyclic compound having two vicinal carboxyl substituents for redispersibility. The water redispersible polymer powder of the present invention imparts good adhesion characteristics, high, fast heat flow characteristics, an unexpectedly faster set time and unexpectedly lower rate of viscosity buildup for cement-based compositions. The RDP comprises a co-dried admixture of a water insoluble film-forming polymer and one or more colloidal stabilizer, preferably a polyvinyl alcohol (PVOH), where the film forming polymer has a glass transition temperature (midpoint Tg- as measured using differential scanning calorimetry using a heating rate of 10°C per minute), of from -20°C to 30°C, characterized in that said film-forming polymer has an average particle size of from 2,000Å to 5,000Å (as determined by laser light scattering), preferably from 2,100Å to 3,900Å, more preferably from 2,200Å to 3,500Å, and is the copolymerization product of a monomer mixture comprising a) from 20 to 79.9 wt% of styrene, b) 79.9 wt% or less of 1,3-butadiene, c)from 0.1% by weight to 2.75% by weight, preferably from 0.5% by weight to 2.5% by weight, more preferably from 1% by weight to 2% by weight, of at least one ethylenically unsaturated dicarboxylic acid, anhydride and/or salt thereof, preferably itaconic acid and/or maleic acid, and optionally d) up to 76 wt% of a comonomer, based upon the weight of the water insoluble film forming polymer, and wherein the amount of carboxylation in the RDP ranges from 0.1 wt.%, preferably, 0.5 wt.%, up to 2.75 wt.%, preferably, up to 2.5 wt.%, or, more preferably, up to 2 wt.%, based on the total weight of the RDP. Accordingly, the amount of carboxylation in the RDPs of the present invention may consist essentially of the carboxylation from copolymerization of the film-forming polymer, i.e. from the dicarboxylic acids copolymerized in the film-forming polymer. Alternatively, the RDPs may include up to 0.75 wt.%, based on the total weight of the RDPs, of additional dicarboxylic acids, monocarboxylic acids, polycarboxylic acids, e.g. citric acid, their salts or admixtures thereof. The film-forming polymer has a glass transition temperature (Tg) of less than 30°C, preferably less than 28°C, more preferably less than 25°C. In preferred embodiments of the invention, the water insoluble film-forming polymer is a copolymer comprising the monomers styrene, butadiene, itaconic acid, and acrylonitrile. In aspects of the invention, the colloidal stabilizer comprises a polyvinyl alcohol in an amount of at least 1% by weight, for example from 2% by weight to 30% by weight, preferably from 5% by weight to 20% by weight, based upon the weight of the water insoluble film-forming polymer.

In an aspect of the present invention, the redispersible polymer powder may be produced by drying an aqueous mixture of the water insoluble film-forming polymer and the colloidal stabilizer to obtain the water redispersible polymer powder. An aqueous dispersion of the water insoluble film-forming polymer may be provided by polymerization, and the colloidal stabilizer may be admixed with the aqueous dispersion after polymerization, and then the aqueous dispersion may be spray dried to obtain the water redispersible polymer powder. Use of the low carboxylation, large particle size, low Tg water insoluble film forming polymer with the PVOH colloidal stabilizer unexpectedly lowers the viscosity of the liquid polymer composition which facilitates spray drying and therefore production of the polymer composition into a redispersible powder, permitting the use of higher solids content compositions for spray drying and lower pressure equipment. Excellent redispersibility is achieved even with compositions containing a highly hydrophobic water insoluble film forming polymer having a low amount of carboxylation.

In another aspect of the present invention, a cement composition such as a cement based tile adhesive, may be produced by admixing cement ingredients with the water redispersible polymer powder made from a SB copolymer latex to obtain a composition, such as a mortar, which exhibits an unexpectedly lower rate of viscosity buildup in latex processing and in use which is advantageous for workability or troweling and provides superior heat flow characteristics, and an unexpectedly faster set time.

### BRIEF DESCRIPTION OF THE DRAWINGS

The present invention is further illustrated by the accompanying drawings wherein:

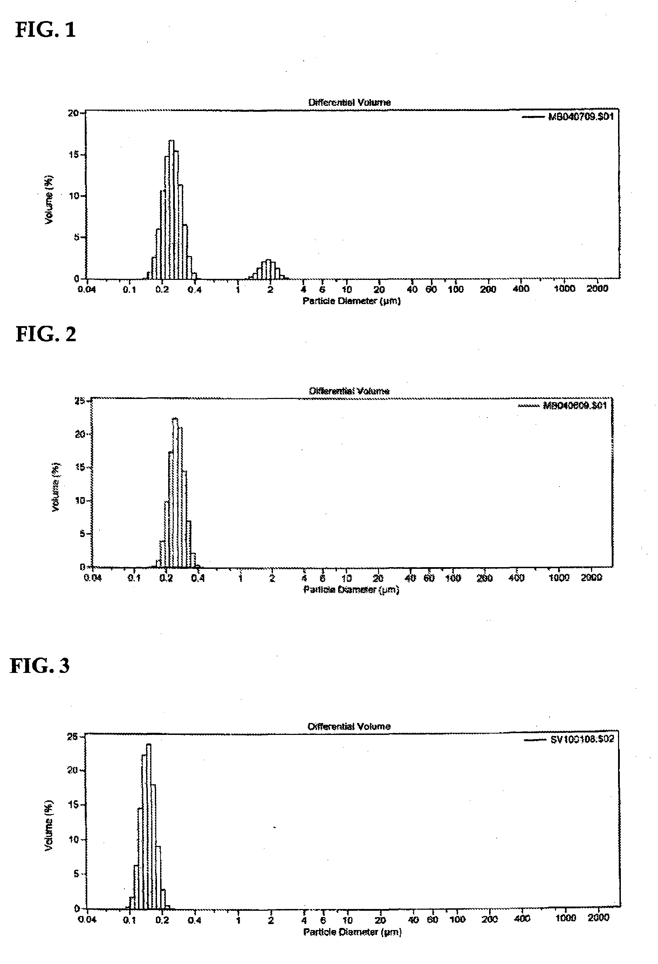

FIG. 1 is a graph showing particle size distribution data for a redispersible polymer powder of the present invention upon redispersing in water where the water insoluble film-forming polymer is a carboxylated styrene butadiene (SB) latex which has a comonomer content of 63.5 parts styrene, 28.75 parts butadiene, 6 parts acrylonitrile, and 1.75 parts itaconic acid (a carboxylation of 1.75% by weight of itaconic acid, based upon the total comonomer weight), with a particle size of 2490 Å, and the colloidal stabilizer in the redispersible polymer powder is a polyvinyl alcohol.

FIG. 2 is a graph showing particle size distribution data for a redispersible polymer powder of the present invention upon redispersing in water where the water insoluble film-forming polymer is a carboxylated styrene butadiene (SB) latex which has a comonomer content of 62.5 parts styrene, 29 parts butadiene, 6 parts acrylonitrile, and 2.5 parts itaconic acid (a carboxylation of 2.5% by weight of itaconic acid, based upon the total comonomer weight) with a particle size of 2660 Å, and the colloidal stabilizer in the redispersible polymer powder is a polyvinyl alcohol.

FIG. 3 is a graph showing particle size distribution data for a comparative redispersible polymer powder upon redispersing in water where the water insoluble film-forming polymer is a carboxylated styrene butadiene (SB) latex which has a comonomer content of 62 parts styrene, 35 parts butadiene, and 3 parts itaconic acid (a carboxylation of 3% by weight of itaconic acid), based upon the total comonomer weight with a particle size of 1500 Å, and a T_{g} of 8°C, and the colloidal stabilizer in the redispersible polymer powder is a polyvinyl alcohol.

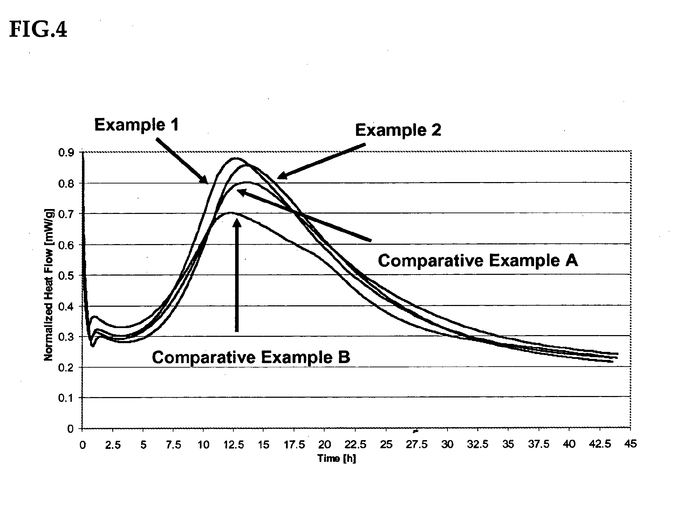

FIG. 4 is a graph showing calorimetry results illustrating the heat flow characteristics of the Example 1 Redispersible Polymer Powder (RDP) relative to the Example 2 RDP and the RDPs of Comparative Examples A and B.

### DETAILED DESCRIPTION OF THE INVENTION

Unless otherwise indicated, all temperature and pressure units are room temperature and standard pressure (STP). All ranges recited are inclusive and combinable.

All phrases comprising parentheses denote either or both of the included parenthetical matter and its absence. For example, the phrase "(meth)acrylate" includes, in the alternative, acrylate and methacrylate.

As used herein, the term "(meth)acrylate" means acrylate, methacrylate, and mixtures thereof and the term "(meth)acrylic" used herein means acrylic, methacrylic, and mixtures thereof.

As used herein, unless otherwise indicated, the phrase "molecular weight" refers to the weight average molecular weight as measured by gel permeation chromatography (GPC) against a poly(methylmethacrylate) or poly(styrene) standard for an anionically stabilized emulsion polymer.

As used herein, the term "polymer" refers, in the alternative, to a polymer made from one or more different monomer, such as a copolymer, a terpolymer, a tetrapolymer, a pentapolymer etc., and may be any of a random, block, graft, sequential or gradient polymer.

As used herein, unless otherwise indicated, the measured glass transition temperature (Tg) is used. As used herein the term "calculated Tg" refers to the Tg of a polymer calculated by using the Fox equation (T. G. Fox, Bull. Am. Physics Soc., Volume 1, Issue No. 3, page 123 (1956). As used herein the term "measured T_{g}" means a T_{g} that is measured using differential scanning calorimetry or DSC (rate of heating 10°C per minute, Tg taken at the midpoint of the inflection.)

As used herein, the phrase "wt.%" stands for weight percent.

As used herein, unless otherwise indicated, the phrase "average particle size", refers to the particle diameter or the largest dimension of a particle in a distribution of powder particles as determined by laser light scattering such that 50 wt. % of the particles in the distribution are smaller than the particle and 50 wt.% of the particles in the distribution are larger than the particle. For initial latex dispersion particles, the average particle size was measured using a Nanotrac NPA 150, a product of Microtrac Inc (York, Pennsylvania) per manufacturer's recommended Procedures via dynamic light scattering. The Doppler shift of light scattered from particles undergoing Brownian motion is compared to a reference beam established by the Fresnel reflection of the laser at the waveguide/medium interface (heterodyne detection) to generate a frequency spectrum, which is subsequently converted to a histogram of particle diameters through the Stokes-Einstein equation. A volume average particle size was recorded. For redispersed particles, the particle size distribution was measured using a Coulter LS 230 particle size analyzer, a product of Beckman Coulter (Brea, California) per manufacturer's recommended Procedures via laser scattering. The scattering light from particles through laser scattering and polarization intensity differential scattering is collected as a function of angle, and subsequently converted to a particle size distribution.

As used herein the term "setting" as disclosed in Concrete - Microstructure, Properties, & Materials, 3rd edition, P. Kumar Mehta, Paulo J.M. Monteiro, page 220, refers to the solidification of the plastic cement paste. The beginning of solidification, called the initial set, marks the point in time when the paste has become unworkable. The paste does not solidify suddenly; it requires considerable time to become fully rigid. The time taken to solidify completely marks the final set, which should not be too long in order to avoid delays in the construction process."

The present inventors have found that for redispersible polymer powders, increasing the particle size of a low carboxylation, low T_{g} water insoluble film-forming styrene butadiene polymer having at least one ethylenically unsaturated dicarboxylic acid monomer which provides the low carboxylation, while at the same time including a colloidal stabilizer such as, for example, PVOH in the redispersible polymer powder results in cement compositions having unexpectedly superior heat flow characteristics, which indicates improved kinetics regarding cement hydration, an unexpectedly faster mortar set time, and unexpectedly lower rate of mortar viscosity buildup which is advantageous for workability or troweling. It also results in significantly lower latex-PVOH viscosity prior to and in spray drying, which can thereby enable the use of higher solids content compositions for spray drying and lower pressure equipment for more efficient production of redispersible polymer powders without loss of redispersibility. For example, characterization via calorimetry shows that mortars formulated with the redispersible polymer powders of the present invention exhibit unexpectedly superior heat flow characteristics relative to mortars formulated with other styrene butadiene and vinylacetate ethylene (VAE) redispersible polymer powders. Similarly, the calorimetry testing of mortars measures the rate of heat evolution which provides information on the rate of hydration and also a relatively quick estimate of setting time. Accordingly, the combination of the polymer particle size and carboxylation level enables an optimum balance of redispersibility, ease of production higher productivity, and improved end-use performance.

The polymers which may be employed in the present invention are water insoluble film-forming polymers having a low degree of carboxylation and a large average particle size. The water insoluble film-forming polymers are a styrenebutadiene copolymer or a styrene and butadiene copolymerized with other monomers. In embodiments of the invention, the water insoluble film-forming polymer may be a large particle size, low carboxylation acrylic.

The water insoluble film-forming copolymers can be prepared by aqueous emulsion or suspension polymerization, preferably emulsion polymerization, in conventional manner, employing conventional polymerization temperatures, eg.. from 40°C to 120°C, preferably, 70°C or more, or, preferably, up to 105°C, and pressures, e.g. with diene comonomer pressures being 150 psi or below, preferably, 100 psi or below. The polymerization may be initiated using conventional amounts of one or more conventional water-soluble or oil (monomer) soluble initiator, such as t-butyl peroxide and cumene hydroperoxide, or a redox initiator combination, using a reducing agent such as sulfites and bisulfites. To control the molecular weight, conventional regulator substances or chain transfer agents, such as mercaptans, alkanols, and dimeric alpha methylstyrene can be used during the polymerization in conventional manner in conventional amounts of from 0.01 to 5.0% by weight, or, preferably, up to 3% by weight, based on the monomers to be polymerized. The polymerization process preferably takes place in known manner in the presence of conventional amounts of one or more conventional emulsifier and/or protective colloid, such as, for example, water soluble copolymers having a number average molecular weight of 2000 or more. Suitable emulsifiers include anionic, cationic and nonionic emulsifiers, for example anionic surfactants such as, for example, 8 to 18 carbon alkyl or alkyl aryl ether sulfates, and their salts, and nonionic surfactants, such as , for example, alkyl or alkyl aryl polyglycol ethers. Suitable protective colloids, instead of or in addition to one or more surfactants, may include, for example, polyvinyl alcohols; polysaccharides in water-soluble form, e.g. starches and cellulosics; proteins such as, for example, casein or soy protein; lignin sulfonates; and synthetic copolymers such as, for example, poly(meth)acrylic acid, and copolymers of (meth)acrylates with carboxyl-functional comonomer units.

In accordance with conventional polymerization methods, especially where larger particle sized aqueous copolymer particles (400 nm or above) are desired seed polymers may be used in polymerization or a seed latex may be formed in-situ. See "Encyclopedia of Polymer Science and Technology", vol. 5, John Wiley & Sons Inc., New York, 1966, p. 847). After completion of the polymerization, residual monomer can be removed by known methods, such as, for example, by adding a redox catalyst chase or by distilling or stripping.

One or more basic compound may be added before, during or after polymerization in an amount of 0.4 moles or more, preferably from 0.5 to 2 moles, more preferably 0.6 moles or more per mole of carboxylic groups in the copolymer. Alternatively, the basic compound can be added in such an amount to adjust the pH of the aqueous copolymer product to 8.0 or more, or 9.5 or more, or, preferably at least 10.5, and preferably up to 12.5. The basic compound may be an inorganic basic compound, preferably a strong inorganic basic compound, such as an alkali metal hydroxide or an alkaline earth metal hydroxide, such as sodium hydroxide or potassium hydroxide.

The copolymers comprise the copolymerization product of from 20 to 79.9%, preferably, 30% or more, for example from 60% to 70% by weight, of styrene a), 79.9 % or less, preferably 60% or less, for example from 20% to 33% by weight of 1,3-butadiene b), from 0.1 to 2.75%, preferably from 0.5% to 2.5% or, more preferably from 1% to 2% by weight of ethylenically unsaturated dicarboxylic acid, anhydride, and/or salt theirof c), and from 0 to 76 %, preferably 40% or less or, more preferably 20% or less, for example from 3% to 7% by weight, of comonomer d), based on the total weight of monomers used to make the copolymer.

The comonomers and their weight proportions are chosen so as to make a copolymer having a glass transition temperature (Tg) of from -20°C and above, preferably 0°C or more, or, more preferably, 10°C and above, up to or less than 30°C, preferably up to or less than 28°C, or, more preferably up to or less than 25°C. If the Tg is too high for use in cement compositions, end use properties suffer, such as flexibility, especially in cold temperatures, and crack bridging. The Tg of the copolymers can be determined in a known manner by differential scanning calorimetry (DSC).

Suitable comonomers c) include, for example, itaconic acid and/or maleic acid and/or fumaric acid to improve the dispersibility of the redispersible copolymer powder.

Suitable optional comonomers d) include, for example, alkyl esters of (meth)acrylic acid, such as, for example, ethyl acrylate, methyl methacrylate, n-butyl acrylate, or 2-ethylhexyl (meth)acrylate, ethylenically unsaturated carboxamides and carbonitriles, such as, for example, (meth)acrylonitrile; diesters of fumaric acid or maleic acid; hydroxy alkyl (meth)acrylates; sulfur acid monomers, such as sodium styrene sulfonate; phosphorus acid monomers, such as phosphoalkyl (meth)acrylates and crosslinking comonomers, such as, for example, divinyl benzene or divinyl adipates; postcrosslinking comonomers, such as acrylamidoglycolic acid (AGA), methyl methylacrylamidoglycolate (MAGME), N-methylol-(meth)acrylamide (NMA) and its alkyl esters; allyl methacrylates or allyl N-methylol carbamates; epoxy-functional comonomers, such as glycidyl (meth)acrylates; and silicon-functional comonomers, such as alkoxysilane containing (meth)acrylates or vinyl monomers.

To increase the water redispersibility of the powder obtained upon drying, a basic compound, as described above, can be added prior to substantially drying the aqueous copolymer dispersion.

In a preferred embodiment, to achieve good water redispersibility and good odor control, 75% or more, preferably, 85% or more, or, more preferably, 95 % or more of the total number of carboxyl groups in the copolymer are located at the surface of the copolymer powder particles. In such copolymers, 75% or more, preferably, 85% or more, or, more preferably, 90 % or more, or, most preferably, 95% or more of the surface carboxyl groups are present in their salt form in the copolymer powder.

A high percentage of the carboxylic groups located at the surface of the copolymer powder particles obtained upon drying can be obtained by the sole use of ethylenically unsaturated dicarboxylic acid(s) as comonomer c), by staged monomer feeding, such as addition of the comonomer c) at an advanced stage of the polymerizations, or by conducting the polymerization at a pH of from 3 to 9, preferably, from 4 to 8, or, preferably 6 or higher.

The percentage of the carboxylic groups that are located at the surface of the powder particles obtained upon drying encompasses all of the carboxylic groups located at the surface of the copolymer particles ,those located in the liquid phase in low molecular weight acid aqueous solution copolymers or as free carboxylic acids or their salts, e.g. citric acid. Upon drying of the aqueous copolymer dispersion, the carboxylic groups located in the liquid phase solution copolymers deposit on the surface of the copolymer particles.

The sum of the molar amount of carboxylic groups located at the surface of the copolymer particles and the molar amount of carboxylic groups in the liquid phase of the aqueous dispersion are separately measurable.

To determine the total amount of carboxylic groups in the copolymer powder, the total molar amount of carboxylic groups is measured by swelling the copolymer particles with a solvent enabling a strong basic compound, such as sodium hydroxide, to neutralize all acid groups present and total acid is titrated via potentiometric titration. For example, 2 g of moist copolymer are diluted with water to a total volume of 20 ml and 7.5 ml of an oil-soluble surfactant solution, such as a solution of an octyl phenol ethoxylate in ethanol is added. Prior to the titration, 7.5 ml of ethyl methyl ketone is added to swell the copolymer particles. The pH of the sample is adjusted to pH 2.5 using HCl (0.5 M) and titration is carried out with 0.5 M NaOH. The pH changes are recorded during titration and to help determine the neutralization equivalent points of the ethylenically unsaturated dicarboxylic acid comonomers. A first neutralization point is recorded when the previously added HCl and any strong acid groups potentially present in the aqueous dispersion are neutralized. A last neutralization point is recorded when all carboxylic groups originating from the ethylenically unsaturated dicarboxylic acids c) are neutralized. The total acid content of the sample can be calculated based on the difference of NaOH addition volume for the first equivalent point and the last equivalent point.

The molar amount of carboxylic groups located at the surface of the copolymer particles and in the serum is measured without swelling the copolymer particles with a solvent enabling the strong basic compound, such as sodium hydroxide, to neutralize only the easily accessible acid groups. The surface and serum acid titration is carried out using potentiometric titration. Moist copolymer in an amount of 2g is diluted with water to a total volume of 20 ml. The pH of the sample is adjusted to pH 2.5 using HCL (0.5 M). The titration is carried out with 0.5 M NaOH. The pH changes are recorded during titration and allow the determination of the neutralization equivalent points of the carboxylic acid groups located in the serum phase and on the surface of the copolymer particles. A first neutralization point is recorded when the previously added HCl and any strong acid groups potentially present in the aqueous dispersion are neutralized. A last neutralization point is recorded when all carboxylic groups originating from the ethylenically unsaturated dicarboxylic acids c) are neutralized. The total acid content of the sample can be calculated based on the difference of NaOH addition volume for the first and last equivalent points.

The measured molar amount of carboxylic groups located at the surface of the copolymer particles and in the liquid phase of the aqueous dispersion is divided by the measured total amount of carboxylic groups in the aqueous dispersion of the copolymer particles to calculate the percentage of carboxylic groups that are located at the surface of the copolymer powder.

To express a percentage of the carboxylic groups located at the surface of the copolymer powder particles that are present at a given pH in their salt form, the difference of NaOH quantities required to reach the first neutralization point and an aimed pH is calculated. This difference is then divided by the NaOH quantity required to neutralize all acid groups located at the surface of the copolymer particles, as described above. Thus, where V1 = Volume of NaOH to reach the first neutralization point, V2 = Volume of NaOH to reach the last neutralization point, and V3 = Volume of NaOH to reach a given pH, Percent neutralization is given as (V3-V1)/(V2-V1)*100.

In embodiments of the invention, the water insoluble film forming polymer has an amount of carboxylation of from 0.1% by weight to 2.75% by weight, preferably from 0.5% by weight to 2.5% by weight, more preferably from 1% by weight to 2% by weight, of at least one ethylenically unsaturated dicarboxylic acid, salts thereof, or mixtures thereof, preferably itaconic acid and/or maleic acid and/or fumaric acid, based upon the total comonomer weight or the weight of the water insoluble film forming polymer, such as a styrene butadiene copolymer with itaconic acid. In accordance with the present invention, the combination of the polymer particle size and total carboxylation level specified significantly impacts redispersibility, latex dispersion and PVOH composition viscosity prior to spray drying, mortar viscosity, and mortar set time. Increasing the amount of carboxylation tends to improve redispersibility of the SB RDP powder, but adversely increases viscosity of the latex dispersion prior to spray drying, and tends to cause slower setting and negatively impacts end-use performance of cement compositions. Thus, one desires to achieve SB RDP powders that exhibit good redispersibility from latexes with lower carboxylation levels. However, reducing the amount of carboxylation negatively impacts redispersibility. In the present invention, increasing the latex polymer particle size enables good powder redispersibility at lower latex carboxylation levels which can provide an optimum balance of redispersibility, latex dispersion-PVOH composition viscosity prior to spray drying, mortar viscosity, set time and end-use performance.

In accordance with the present invention, the water insoluble film-forming polymer in the aqueous dispersion or latex which is to be spray dried has an average particle size of from 2,000Å to 5,000Å, preferably from 2,100Å to 3,900Å, more preferably from 2,200Å to 3,500Å. Reducing the average particle size below 2,000Å, tends to adversely increase viscosity of the aqueous dispersion of polymer and colloidal stabilizer thereby impeding spray drying and necessitating higher pressure spray drying equipment and/or lower solids levels for spray drying.

The aqueous dispersions or latex, which refers generically to a stable dispersion or emulsion of polymer microparticles in an aqueous medium, obtained in the present invention may generally have a solids content of from 30 to 75% by weight, for example between 35% and 65% by weight, preferably from 40 to 60% by weight.

The water redispersible polymer powders of the present invention include a co-dried admixture of a water insoluble film-forming polymer and a colloidal stabilizer for colloidal stabilization and redispersibility of polymer powders into submicron particle sizes. While polyvinyl alcohol (PVOH) employed as a colloidal stabilizer increases viscosity of the aqueous polymer dispersion prior to spray drying, the use of a low carboxylation, large average particle size water insoluble film-forming polymer provides an unexpectedly low viscosity for spray drying even at relatively high levels of colloidal stabilizer and high levels of solids in the dispersion subjected to spray drying. Preferred polyvinyl alcohols for use herein are partially hydrolyzed polyvinyl alcohols. In embodiments of the invention, the amount of PVOH or other known colloidal stabilizers employed to achieve colloidal stability may be at least 1% by weight, for example from 2% by weight to 30% by weight, preferably from 5% by weight to 20% by weight, based upon the weight of the water insoluble film-forming polymer.

In accordance with the method of making the redispersible polymer powder of the present invention, a water redispersible polymer powder may be produced by drying an aqueous mixture of the water insoluble film-forming polymer and a colloidal stabilizer to obtain a water redispersible polymer powder. In preferred embodiments, an aqueous dispersion of the water insoluble film-forming polymer obtained by polymerization, is admixed with the colloidal stabilizer to obtain a substantially homogeneous aqueous dispersion which is then spray dried to obtain the water redispersible polymer powder. In one example, the viscosity of the feed to be spray-dried may be adjusted via the solids content so that a value of less than 1000 mPas (Brookfield viscosity at 20 revolutions and 23°C), preferably less than 250 mPas, is obtained. The solids content of the dispersion to be spray-dried may generally be from 25% to 60% by weight, preferably from 35% to 50% by weight, based on the total weight of the dispersion. To prepare the water-redispersible polymer powders, the aqueous dispersions are dried, preferably by spray drying. Spray drying can be carried out in customary spray drying plants, with atomization being carried out by means of single- fluid, two- fluid or multifluid nozzles or a rotary disc atomizer. In general, air, nitrogen or nitrogen enriched air may be employed as the drying gas, the inlet temperature of the drying gas generally not exceeding 200°C, preferably from 110°C to 180°C, more preferably from 140°C to 170°C. The outlet temperature may generally be from 45°C to 120°C, preferably from 60°C to 90°C, depending on the plant, the Tg of the resin and the desired degree of drying.

In addition to the colloidal stabilizer, conventional optional additives in conventional amounts can be added prior to drying the aqueous dispersion, such as an antifoaming agent in an amount of up to 1.5% by weight of antifoam, based on the weight of the polymer particles. Other additives which may be employed, in conventional amounts, include one or more salts, such as CaCl₂, and MgCl₂, emulsifiers or surfactants, monosaccharides, disaccharides, and anticaking agents (antiblocking agents) such as kaolin. The amount of the anticaking agent may preferably be up to 30% by weight, more preferably from 3% by weight to 15% by weight, based on the total powder quantity.

The X50 size of the particle size distribution of the redispersible powder depends on drying conditions and drying equipment. X50 represents the median diameter in micrometers, which means that 50% by weight of the particles are smaller than this diameter. The produced water-redispersible polymer powder preferably has an X50 particle size diameter of from 5 to 300 micrometers, preferably from 20 to 200 micrometers, most preferably from 50 to 100 micrometers. The particle size distribution of the powder can be measured by laser diffraction using a particle size analyzer "Sympatec Helos" at a measuring range of 1.8 - 350 µm and dispersing the powder by compressed air.

The weight of the polymer particles in the powder, for example, weight of the carboxylated copolymer of vinyl aromatic comonomer and 1,3-diene comonomer described herein in the powder, may preferably be from 40% by weight to 95% by weight, more preferably from 65% by weight to 87% by weight, of the total weight of the water-redispersible polymer powder.

The redispersible polymer powders, which may have an average particle size of from 5 to 100 micrometers, for example from 10µm to 20µm particle size may be readily dispersed into deionized water to provide an original latex particle size distribution, such as less than 2µm.

The water-redispersible polymer powders of the present invention have a variety of uses. In embodiments of the invention, the carboxylated styrene-butadiene redispersible polymer powders of the present invention may be employed in blends with one or more acrylic redispersible polymer powders (RDPs), VAE RDPs, VAE/VeoVA RDPs, epoxy based RDPs, polyolefin dispersion based RDPs, and mixtures thereof. The powders of the present invention may be employed as functional additives in a wide variety of compositions such as construction materials, personal care compositions, pharmaceutical compositions, and agricultural compositions, in high salt concentration applications or environments, such as off-shore oil well cementing, oil and gas drilling and cement, and in hard water. Additional uses of the powders are in waste management applications, such as compositions for synthetic covers for bulk material piles, such as waste, coal sludge containment, soil, soil erosion control, which minimize water infiltration, nuisance fugitive dust, odor, and affinity to birds. The powders may be used in alternative landfill covers that are sprayable, use inexpensive widely available and environmentally friendly recycled materials, have good adherence to plastics and glass waste, and can form/harden within a short time, and in adhesion enhancing admixtures. The powders may also be employed in the production of foams, such as polyurethane foams.

In preferred embodiments, the water-redispersible polymer powder may be used as an additive in a setting composition which may further include an inorganic hydraulic binder. Examples of inorganic binders include cements, such as Portland cement, alumina cement, pozzolanic cement, slag cement, magnesia cement and phosphate cement; gypsum hemihydrate and water-glass. Illustrative uses of the polymer composition according to the present invention are in tile adhesives, construction adhesives, renders, joint mortars, plasters, troweling compositions, filling compositions, such as floor filling compositions (e.g. self-leveling flooring compounds), concrete repair joints, joint mortars, tape joint compounds, concrete, water proofing membrane applications, crack isolation membrane applications, and additives for ceramic processing. In particular, the use of the water-redispersible polymer powder described herein in a setting composition, e.g. in cement-based tile adhesives or in external thermal insulation composite systems, result in compositions with high initial adhesion strength, high adhesion strength after immersion in water (water resistance), and high adhesion strength after allowing a certain "open time" before final application of the hydrated setting composition. In embodiments of the invention, the water-redispersible polymer powder may be employed as a binder for slip casting, of for example raw materials such as silica, alumina, alkali metal oxides, and alkaline earth metal oxides.

A preferred use of the water-redispersible polymer powder is in concrete compositions or other compositions which exhibit a high pH, for example a pH of at least 11, for example from 11.5 to 13.5. The redispersible polymer powders of the present invention may be employed in tile adhesives, such as cement-based tile adhesives. Cement-based tile adhesives may generally comprise 5 to 50 parts by weight of cement, preferably Portland cement, as the hydraulic binder; 40 to 70 parts by weight of quartz sand, preferably having a particle size of from 0.1mm to 0.5mm, as the main filler, and 0.1% to 10% by weight, preferably 1% to 6% by weight (based on the dry weight of the tile adhesive) of the redispersible polymer powder according to the present invention. Further optional components include one or more cellulose ethers (preferably in a total amount of 0.05% to 1% by weight, more preferably 0.2% to 0.5% by weight, based on the dry weight of the tile adhesive) to control rheology, water retention, slip resistance and improved workability; quartz or lime stone powder having a particle size of from 30µm to 60µm as fine co-filler to improve consistency and workability; and cellulose or mineral fibers to improve the slip resistance.

Another use of the water-redispersible polymer powders is in self- leveling flooring compounds SLFC. The powders may be added to improve the adhesion to the substrate, the flexibility, the abrasion resistance and the aging properties. In other embodiments, the water-redispersible polymer powder may be used in external thermal insulation systems ETICS, particularly as an adhesive on the thermally insulating board layer to reduce the water absorption and improve the impact resistance of the external thermal insulation system.

Furthermore, the water-redispersible polymer powder according to the present invention may be used in paper products, paperboard products, carpet backing, paints or coatings or in binders for wood, paper or textiles coatings or impregnating compositions, preferably in the absence of a substantial amount of an inorganic hydraulic binding agent, more preferably in the absence of any amount of an inorganic hydraulic binding agent. For example, the water-redispersible polymer powder may be used as the sole binder in coating compositions and adhesives.

The following examples are provided for illustrative purposes only and are not intended to limit the scope of the claims that follow. Unless otherwise indicated, all parts and percentages are by weight, all temperatures are in °C, and all pressures are in bars or atmospheric unless otherwise indicated to the contrary.

### EXAMPLE 1

A redispersible polymer powder was produced by admixing: a) a water insoluble film forming carboxylated styrene butadiene (SB) latex which has a comonomer content of 63.5 parts styrene, 28.75 parts butadiene, 6 parts acrylonitrile, and 1.75 parts itaconic acid (a carboxylation of 1.75% by weight of itaconic acid, based upon the total comonomer weight), with a particle size of 2490 Å, and a Tg of less than 25°C, and b) 10% by weight of MOWIOL 4-88, based upon the weight of the latex polymer. The MOWIOL 4-88 is a partially hydrolyzed PVOH (polyvinylalcohol) in granular form, and is available from Kuraray Europe GmbH, Division PVA/PVB D-65926 Frankfurt am Main, Germany. The MOWIOL 4-88 has a viscosity DIN 53015 of 4 ± 0.5 mPa-s (4% aqueous solution at 20°C), a degree of hydrolysis (saponification) of 87.7 ± 1.0 mol. %, an ester value DIN 53401 of 140 ± 10 mg KOH/g, a residual acetyl content of 10.8 ± 0.8 w/w%, and a maximum ash content of 0.5% (calculated as Na₂O) The mixture has a total solids content of 35% by weight, based upon the total weight of the mixture.

This mixture was pumped to a two-fluid nozzle atomizer equipped on a Mobile Minor spray dryer. The air pressure to the nozzle was fixed at 1 bar with 50% flow which is equivalent to 6 kg/hr of airflow. The spray drying was conducted in an N₂ environment with an inlet temperature fixed at 140°C, and the outlet temperature was targeted to 50°C ± 1°C by tuning the feed rate of the mixture. Concurrently, kaolin powder (KaMin HG 90) was added into the chamber for spray drying as an anti-caking agent, with the amount being controlled to be 10% by weight of the dry powders.

The redispersible polymer powder obtained by the spray drying had an average particle size between 10 to 20 µm. The spray dried powder was dispersed into deionized (DI) water at a 1% by weight solids level, and vortexed for 30 seconds twice. The redispersion was then measured using a Coulter LS 230 Laser Diffraction Particle Size Analyzer. FIG. 1 shows the particle size distribution data of the redispersion, which indicates that the redispersible polymer powder was readily dispersed to the original SB latex particle size distribution.

### EXAMPLE 2

A redispersible polymer powder was produced as in Example 1 except that a) a water insoluble film forming carboxylated styrene butadiene (SB) latex was used which has a comonomer content of 62.5 parts styrene, 29 parts butadiene, 6 parts acrylonitrile, and 2.5 parts itaconic acid (a carboxylation of 2.5% by weight of itaconic acid, based upon the total comonomer weight) with a particle size of 2660 Å, and b) 10% by weight of MOWIOL 4-88, based upon the weight of the latex polymer. The mixture has a total solids content of 35% by weight, based upon the total weight of the mixture.

The redispersible polymer powder obtained by the spray drying had an average particle size between 10 to 20 µm. The spray dried powder was dispersed into deionized (DI) water at a 1% by weight solids level, and vortexed for 30 seconds twice. The redispersion was then measured using a Coulter LS 230 Laser Diffraction Particle Size Analyzer. FIG. 2 shows the particle size distribution data of the redispersion, which indicates that the redispersible polymer powder was readily dispersed to the original SB latex particle size distribution.

### COMPARATIVE EXAMPLE A

A redispersible polymer powder may be produced as in Example 1 except the redispersible polymer powder may be produced using: a) a water insoluble film forming carboxylated styrene butadiene (SB) latex which has a comonomer content of 62 parts styrene, 35 parts butadiene, and 3 parts itaconic acid (a carboxylation of 3% by weight of itaconic acid), based upon the total comonomer weight with a particle size of 1500 Å, and a Tg of 8°C, and b) 10% by weight of MOWIOL 4-88 based upon the weight of the latex polymer. The mixture has a total solids content of 35% by weight, based upon the total weight of the mixture.

The redispersible polymer powder obtained by the spray drying had an average particle size between 10 to 20 µm. The spray dried powder was dispersed into deionized (DI) water at a 1% by weight solids level, and vortexed for 30 seconds twice. The redispersion was then measured using a Coulter LS 230 Laser Diffraction Particle Size Analyzer. FIG. 3 shows the particle size distribution data of the redispersion, which indicates that the redispersible polymer powder was readily dispersed to the original SB latex particle size distribution.

### COMPARATIVE EXAMPLE B

Comparative B redispersible polymer powder is DLP 2000, a commercial redispersible polymer powder produced by The Dow Chemical Company, Midland Michigan. DLP 2000 is based on a vinylacetate/ethylene copolymer. It is a multipurpose redispersible powder, which is medium hard with an ash content of 10-14% by weight, a density of 0.375 g/ml to 0.525 g/ml, and a moisture content of less than 2% by weight.

### EXAMPLE 3

### Viscosity Comparison For Mixtures Of Styrene-Butadiene Latexes And a Colloidal Stabilizer (Prior to Spray Drying)

The Brookfield Viscosity of a mixture of 150 g of the styrene butadiene (SB) latex of Example 1 (which has a comonomer content of 63.5 parts styrene, 28.75 parts butadiene, 6 parts acrylonitrile, and 1.75 parts itaconic acid and a particle size of 2490 Å) with a solids content of 50% by weight, and 50 g of the PVOH colloidal stabilizer MOWIOL 4-88, with a solids content of 15% by weight, was measured using a Brookfield Viscometer Model LVTDV-II under the conditions of 60 rpm, LV Spindle 4, and 25°C. The viscosity reading was 408 cps.

The Brookfield Viscosity of a mixture of 150 g of the styrene butadiene (SB) latex of Example 2 (which has a comonomer content of 62.5 parts styrene, 29 parts butadiene, 6 parts acrylonitrile, and 2.5 parts itaconic acid and a particle size of 2660 Å) with a solids content of 50% by weight, and 50 g of the PVOH colloidal stabilizer MOWIOL 4-88, with a solids content of 15% by weight, was measured using a Brookfield Viscometer Model LVTDV-II under the conditions of 60 rpm, LV Spindle 4, and 25°C. The viscosity reading was 579 cps.

The Brookfield Viscosity of a mixture of 150 g of the styrene butadiene (SB) latex of Comparative Example A (which has a comonomer content of 62 parts styrene, 35 parts butadiene, and 3 parts itaconic acid and a particle size of 1500 Å) with a solids content of 50% by weight, and 50 g of the PVOH colloidal stabilizer MOWIOL 4-88, with a solids content of 15% by weight, was measured using a Brookfield Viscometer Model LVTDV-II under the conditions of 60 rpm, LV Spindle 4, and 25°C. The viscosity reading was 3252 cps.

Table 1, below, shows that at 41% by weight solids content, the viscosity of the latex composition comprised of a low carboxylation, large particle size polymer as in Examples 1 and 2 was significantly lower as compared to the viscosity of the latex composition comprised of a relatively higher carboxylation, smaller particle size polymer as in Comparative Example A, which indicates more difficulty in spray drying of the latter. Table 1, below, shows that when formulated at a total solids (polymer latex with 10% PVOH colloidal stabilizer by weight based upon the weight of the water insoluble film-forming polymer) content of 45%, the low carboxylation, large particle size latex polymer as in Example 2 retained a low viscosity when compared to the viscosity of the latex composition comprised of a relatively higher carboxylation, smaller particle size polymer latex formulated at a 41% total solids as in Comparative Example A. This indicates higher spray drying productivity for the inventive SB RDP.

**Table 1: Viscosity Measurements For Mixtures Of Styrene-Butadiene Latexes And a Colloidal Stabilizer**

| Styrene Butadiene Latex | Latex polymer particle size (Å) | Carboxylation (wt %) | Wt% PVOH | Solids content (wt %) | Viscosity cps |
|---|---|---|---|---|---|
| Example 1 | 2490 | 1.75 | 10 | 41 | 408 |
| Example 2 | 2660 | 2.5 | 10 | 41 | 579 |
| Example 2 | 2660 | 2.5 | 10 | 45 | 2552 |
| Comparative Example A | 1500 | 3.0 | 10 | 41 | 3252 |

The particle size distributions upon redispersion shown in FIGS. 1, 2, and 3 show that the redispersibility of the redispersible polymer powder of the present invention which is comprised of a low carboxylation, large particle size polymer (Example 1 and FIG. 1, and Example 2 and FIG. 2) is as good as the redispersibility of the comparative redispersible polymer powder which is comprised of a relatively higher carboxylation, smaller particle size polymer (Comparative Example A and FIG. 3).

The attainment of lower viscosity for mixtures of styrene-butadiene latexes and a colloidal stabilizer where the latex copolymer has a large particle size and low percentage of carboxylation in accordance with the present invention enables the use of higher solids content compositions for spray drying and lower pressure equipment for more efficient production of redispersible polymer powders while achieving excellent redispersibility of the redispersible polymer powders.

### EXAMPLE 4

The components and their relative amounts (% by weight or parts by weight, pbw) which may be used to prepare cement-based mortar compositions using the redispersible powder compositions of Examples 1 and 2, and Comparative Examples A and B are shown in Table 2, below. The different cement-based mortar compositions may be prepared by dry blending the solid components indicated in Table 1 and then adding water. Various properties of the cement-based mortar compositions and their performance may be tested and the results are shown in FIG. 4 and Table 3, below.

### Calorimetry and Set Time Comparison

### Test Methods:

Dry Mix Preparation: The cement, sand, polymer, and thickener are weighed and placed into a plastic bag which is then hand mixed for 2 minutes and conditioned for 24 hrs.

Viscosity: Viscosities are measured with a Brookfield Synchro-lectric viscometer (Model RVT) in combination with a Brookfield Helipath stand at 25°C. The mortar is filled into a density cup and the spindle (T-F) is positioned such that it just touches the surface of the mortar. The spindle of the viscometer rotates for 2 minutes with 5 rpm. During the rotation the viscometer is moved up and down so that its rotating spindle describes a helical path through the sample. The first measurement is not taken until the spindle is fully submerged after one full rotation. Four readings are measured as the viscometer moves in each direction, the average of which is reported.

Density: Mortars are placed into a container of known volume, tamped down, and then weighed.

Set time: Set time was measured according to ASTM C191. Mortar is placed into the circular set time molds which are then covered with a layer of plastic held in place by a rubber band. These are then placed into position under the Vicat needles. Initial set time and final set time are measured according to the distance the needle can penetrate into the mortar.

Heat flow characteristics: Heat flow characteristics were determined with an isothermal (heat conduction) calorimeter (TAM AIR) in which the rate of heat production in small samples at constant temperature is continuously measured. The TAM Air is an eight channel micro calorimeter from TA Instruments with an operating temperature range of 5-90°C. All calorimetric channels are of twin type, consisting of a sample and a reference vessel, each with a 20 ml volume. The thermostat employs circulating air and an advanced regulating system to keep the temperature very stable (within ± 0.02 K). About 3 g fresh mortars were filled in the vessel and were measured at 20°C and 10°C for about 48 hours.

**TABLE 2: Cement-based Mortar Formulations**

| **RAW MATERIAL** | **Formula (% by Weight)** | | | |
|---|---|---|---|---|
| | **Ex.1** | **Ex.2** | **Comp. A** | **Comp. B** |
| Portland Cement Type 1 | 35 | 35 | 35 | 35 |
| Sand F-80, Silica Sand | 61.96 | 61.96 | 61.96 | 61.96 |
| Calcium Formate | 0.7 | 0.7 | 0.7 | 0.7 |
| Redispersible Polymer Powder of Example 1 | 2 | -- | -- | -- |
| Redispersible Polymer Powder of Example 2 | -- | 2 | -- | -- |
| Redispersible Polymer Powder of Comparative Example A | -- | -- | 2 | -- |
| Redispersible Polymer Powder of Comparative Example B | -- | -- | -- | 2 |
| WALOCEL MW 40000 PFV, hydroxyethyl methyl cellulose (HEMC) thickener (Dow Chemical Co.) | 0.34 | 0.34 | 0.34 | 0.34 |
| Total, % by weight | 100 | 100 | 100 | 100 |
| Water:Powder Ratio by weight | 0.230 | 0.230 | 0.230 | 0.230 |

FIG. 4 shows calorimetry results illustrating the surprisingly better heat flow characteristics of the Example 1 Redispersible Polymer Powder (RDP) relative to the Example 2 RDP and RDPs of Comparative Examples A and B. The onset of the peak and peak height of the Example 1 RDP is better than any of the other RDPs. This is consistent with the set time data shown in Table 3, below, which shows various properties of the cement-based mortar compositions.

In addition, as shown in Table 3, below, a mortar formulated with the Example 1 RDP exhibits a significantly lower rate of viscosity buildup relative to the RDP of Comparative Example A, which is advantageous for workability or ease of troweling during application.

**TABLE 3: Cement-based Mortar Formulation Test Results**

| **RAW MATERIAL** | **Formula** | | | |
|---|---|---|---|---|
| | **Ex. 1** | **Ex. 2** | **Comp. A** | **Comp. B** |
| Density (g/ml) | 1.62 | 1.58 | 1.59 | 1.60 |
| Set Time, Initial (minutes) | 678 | 707 | 712 | 721 |
| Set Time, Final (minutes) | 750 | 773 | 772 | 787 |
| Brookfield viscosity 5 RPM (cps) | 476250 | 478808 | 481250 | 428750 |
| Brookfield viscosity increase after 5 minutes (%) | 1 | 3 | 18 | 0 |

## Claims

1. A water redispersible polymer powder (RDP) comprising a co-dried admixture of a water insoluble film-forming polymer and a colloidal stabilizer, said film forming polymer having a glass transition temperature (midpoint Tg - as measured using differential scanning calorimetry using a heating rate of 10°C per minute) of from -20°C to 30°C,
**characterized in that**
said water insoluble film-forming polymer has an average particle size of from 2,000Å to 5,000Å (as determined by laser light scattering) and is the copolymerization product of a monomer mixture comprising a) from 20 to 79.9 wt % of styrene, b) 79.9 wt% or less of 1,3-butadiene, c) 0.1 to 2.75 wt% of at least one ethylenically unsaturated dicarboxylic acid, anhydride and/or salt thereof, and optionally d) up to 76 wt% of a comonomer, based upon the weight of the water insoluble film forming polymer,
and wherein the amount of carboxylation in the RDP ranges from 0.1 wt.% up to 2.75 wt.%, based on the total weight of the RDP.

2. A water redispersible polymer powder as claimed in claim 1 wherein the water insoluble film-forming polymer has an average particle size of from 2,100Å to 3,900Å, a glass transition temperature (Tg) of less than 28°C, and comprises 0.5 to 2.5 wt% of copolymerized itaconic acid and/or maleic acid.

3. A water redispersible polymer powder as claimed in claim 1 wherein the water insoluble film-forming polymer is a copolymer formed from a monomer mixture comprising the monomers styrene, butadiene, itaconic acid, and acrylonitrile.

4. A water redispersible polymer powder as claimed in claim 1 wherein the colloidal stabilizer comprises a polyvinyl alcohol in an amount of at least 1% and up to 30% by weight based upon the weight of the water insoluble film-forming polymer.

5. A water redispersible polymer powder as claimed in claim 1 wherein
the water insoluble film-forming polymer has an average particle size of from 2,200Å to 3,500Å, a glass transition temperature (Tg) of less than 25°C, and comprises 1 to 2 wt% of copolymerized itaconic acid and/or maleic acid, and the colloidal stabilizer comprises a polyvinyl alcohol in an amount of at least 1% by weight, based upon the weight of the water insoluble film-forming polymer.

6. A method for producing a water redispersible polymer powder (RDP)
wherein the amount of carboxylation in the RDP ranges from 0.1 wt.% up to 2.75 wt.%, based on the total weight of the RDP, the method comprising drying an aqueous mixture of a water insoluble film-forming polymer and a colloidal stabilizer to obtain a water redispersible polymer powder, wherein the film forming polymer has a glass transition temperature (midpoint T_{g} - as measured using differential scanning calorimetry using a heating rate of 10°C per minute) of from -20°C to 30°C and an average particle size of from 2,000Å to 5,000Å (as determined by laser light scattering), and is the copolymerization product of a monomer mixture comprising a) from 20 to 79.9 wt % of styrene, b) 79.9 wt% of less of 1,3-butadiene, c) 0.1% by weight to 2.75% by weight of at least one ethylenically unsaturated dicarboxylic acid, anhydride and/or salt thereof, and optionally d) up to 76 wt% of a comonomer, based upon the weight of the water insoluble film forming polymer.

7. A method for producing a water redispersible polymer powder as claimed in claim 6 wherein the water insoluble film-forming polymer has an average particle size of from 2,100Å to 3,900Å, a glass transition temperature (Tg) of less than 28°C, and comprises 0.5 to 2.5 wt% of copolymerized itaconic acid and/or maleic acid.

8. A method for producing a water redispersible polymer powder as claimed in claim 6 wherein the water insoluble film-forming polymer is a copolymer formed from a mixture of monomers comprising the monomers styrene, butadiene, itaconic acid, and acrylonitrile, and
wherein the colloidal stabilizer comprises a polyvinyl alcohol in an amount of at least 1% by weight, based upon the weight of the water insoluble film-forming polymer.

9. A method for making a cement composition comprising admixing cement ingredients with a water redispersible polymer powder as claimed in claim 1.

## Patentansprüche

1. Ein Wasser-redispergierbares Polymerpulver (RDP), das ein gemeinsam getrocknetes Gemisch eines wasserunlöslichen filmbildenden Polymers und eines Kolloidstabilisators beinhaltet, wobei das filmbildende Polymer eine Glasübergangstemperatur (Mittelwert-Tg - wie gemessen unter Verwendung von Differenzialrasterkalorimetrie unter Verwendung einer Aufheizgeschwindigkeit von 10 °C pro Minute) von -20 °C bis 30 °C aufweist,
**dadurch gekennzeichnet, dass**
das wasserunlösliche filmbildende Polymer eine durchschnittliche Partikelgröße von 2000 Å bis 5000 Å (wie bestimmt durch Laserlichtstreuung) aufweist und das Copolymerisationsprodukt einer Monomermischung ist, die Folgendes beinhaltet: a) zu von 20 bis 79,9 Gew.-% Styren, b) zu 79,9 Gew.-% oder weniger 1,3-Butadien, c) zu 0,1 bis 2,75 Gew.-% mindestens eine ethylenisch ungesättigte Dicarbonsäure, ein Anhydrid und/oder ein Salz davon, und wahlweise d) zu bis zu 76 Gew.-% ein Comonomer, bezogen auf das Gewicht des wasserunlöslichen filmbildenden Polymers, und wobei die Menge der Carboxylierung in dem RDP in dem Bereich von 0,1 Gew.-% bis zu 2,75 Gew.-%, bezogen auf das Gesamtgewicht des RDP, liegt.

2. Wasser-redispergierbares Polymerpulver gemäß Anspruch 1, wobei das wasserunlösliche filmbildende Polymer eine durchschnittliche Partikelgröße von 2100 Å bis 3900 Å, eine Glasübergangstemperatur (Tg) von weniger als 28 °C aufweist und zu 0,5 bis 2,5 Gew.-% copolymerisierte Itaconsäure und/oder Maleinsäure beinhaltet.

3. Wasser-redispergierbares Polymerpulver gemäß Anspruch 1, wobei das wasserunlösliche filmbildende Polymer ein Copolymer ist, das aus einer Monomermischung gebildet ist, die die Monomere Styren, Butadien, Itaconsäure und Acrylnitril beinhaltet.

4. Wasser-redispergierbares Polymerpulver gemäß Anspruch 1, wobei der Kolloidstabilisator einen Polyvinylalkohol in einer Menge von mindestens 1 und bis zu 30 Gew.-%, bezogen auf das Gewicht des wasserunlöslichen filmbildenden Polymers, beinhaltet.

5. Wasser-redispergierbares Polymerpulver gemäß Anspruch 1, wobei das wasserunlösliche filmbildende Polymer eine durchschnittliche Partikelgröße von 2200 Å bis 3500 Å, eine Glasübergangstemperatur (Tg) von weniger als 25 °C aufweist und zu 1 bis 2 Gew.-% copolymerisierte Itaconsäure und/oder Maleinsäure beinhaltet, und der Kolloidstabilisator einen Polyvinylalkohol in einer Menge von mindestens 1 Gew.-%, bezogen auf das Gewicht des wasserunlöslichen filmbildenden Polymers, beinhaltet.

6. Ein Verfahren zum Produzieren eines Wasser-redispergierbaren Polymerpulvers (RDP), wobei die Menge der Carboxylierung in dem RDP in dem Bereich von 0,1 Gew.-% bis zu 2,75 Gew.-%, bezogen auf das Gesamtgewicht des RDP, liegt, wobei das Verfahren Folgendes beinhaltet: Trocknen einer wässrigen Mischung eines wasserunlöslichen filmbildenden Polymers und eines Kolloidstabilisators, um ein Wasser-redispergierbares Polymerpulver zu erhalten, wobei das filmbildende Polymer eine Glasübergangstemperatur (Mittelwert-Tg - wie gemessen unter Verwendung von Differenzialrasterkalorimetrie unter Verwendung einer Aufheizgeschwindigkeit von 10 °C pro Minute) von -20 °C bis 30 °C und eine durchschnittliche Partikelgröße von 2000 Å bis 5000 Å (wie bestimmt durch Laserlichtstreuung) aufweist und das Copolymerisationsprodukt einer Monomermischung ist, die Folgendes beinhaltet: a) zu von 20 bis 79,9 Gew.-% Styren, b) zu 79,9 Gew.-% von weniger 1,3-Butadien, c) zu 0,1 Gew.-% bis 2,75 Gew.-% mindestens eine ethylenisch ungesättigte Dicarbonsäure, ein Anhydrid und/oder ein Salz davon, und wahlweise d) zu bis zu 76 Gew.-% ein Comonomer, bezogen auf das Gewicht des wasserunlöslichen filmbildenden Polymers.

7. Verfahren zum Produzieren eines Wasser-redispergierbaren Polymerpulvers gemäß Anspruch 6, wobei das wasserunlösliche filmbildende Polymer eine durchschnittliche Partikelgröße von 2100 Å bis 3900 Å, eine Glasübergangstemperatur (Tg) von weniger als 28 °C aufweist und zu 0,5 bis 2,5 Gew.-% copolymerisierte Itaconsäure und/oder Maleinsäure beinhaltet.

8. Verfahren zum Produzieren eines Wasser-redispergierbaren Polymerpulvers gemäß Anspruch 6, wobei das wasserunlösliche filmbildende Polymer ein Copolymer ist, das aus einer Monomermischung gebildet ist, die die Monomere Styren, Butadien, Itaconsäure und Acrylnitril beinhaltet, und
wobei der Kolloidstabilisator einen Polyvinylalkohol in einer Menge von mindestens 1 Gew.-%, bezogen auf das Gewicht des wasserunlöslichen filmbildenden Polymers, beinhaltet.

9. Ein Verfahren zum Herstellen einer Zementzusammensetzung, das das Vermischen von Zementbestandteilen mit einem Wasser-redispergierbaren Polymerpulver gemäß Anspruch 1 beinhaltet.

## Revendications

1. Une poudre de polymère redispersable dans l'eau (RDP) comprenant un mélange coséché d'un polymère filmogène insoluble dans l'eau et d'un stabilisant colloïdal, ledit polymère filmogène ayant une température de transition vitreuse (point médian Tg - tel que mesuré par calorimétrie différentielle à balayage en utilisant une vitesse de chauffage de 10 °C par minute) allant de -20 °C à 30 °C,
**caractérisée en ce que**
ledit polymère filmogène insoluble dans l'eau a une taille moyenne de particules allant de 2 000 Å à 5 000 Å (telle que déterminée par diffusion de lumière laser) et est le produit de copolymérisation d'un mélange de monomères comprenant a) de 20 à 79,9 % en poids de styrène, b) 79,9 % en poids ou moins de 1,3-butadiène, c) 0,1 à 2,75 % en poids d'au moins un acide dicarboxylique éthyléniquement insaturé, un anhydride et/ou un sel de celui-ci, et facultativement d) jusqu'à 76 % en poids d'un comonomère, rapporté au poids du polymère filmogène insoluble dans l'eau,
et dans laquelle la quantité de carboxylation dans la RDP est comprise dans la gamme allant de 0,1 % en poids jusqu'à 2,75 % en poids rapporté au poids total de la RDP.

2. Une poudre de polymère redispersable dans l'eau telle que revendiquée dans la revendication 1 dans laquelle le polymère filmogène insoluble dans l'eau a une taille moyenne de particules allant de 2 100 Å à 3 900 Å, une température de transition vitreuse (Tg) inférieure à 28 °C, et comprend 0,5 à 2,5 % en poids d'acide itaconique et/ou d'acide maléique copolymérisés.

3. Une poudre de polymère redispersable dans l'eau telle que revendiquée dans la revendication 1 dans laquelle le polymère filmogène insoluble dans l'eau est un copolymère formé à partir d'un mélange de monomères comprenant les monomères styrène, butadiène, acide itaconique, et acrylonitrile.

4. Une poudre de polymère redispersable dans l'eau telle que revendiquée dans la revendication 1 dans laquelle le stabilisant colloïdal comprend un alcool polyvinylique dans une quantité d'au moins 1 % et allant jusqu'à 30 % en poids rapporté au poids du polymère filmogène insoluble dans l'eau.

5. Une poudre de polymère redispersable dans l'eau telle que revendiquée dans la revendication 1 dans laquelle le polyère filmogène insoluble dans l'eau a une taille moyenne de particules allant de 2 200 Å à 3 500 Å, une température de transition vitreuse (Tg) inférieure à 25 °C, et comprend 1 à 2 % en poids d'acide itaconique et/ou d'acide maléique copolymérisés, et le stabilisant colloïdal comprend un alcool polyvinylique dans une quantité d'au moins 1 % en poids, rapporté au poids du polymère filmogène insoluble dans l'eau.

6. Une méthode pour produire une poudre de polymère redispersable dans l'eau (RDP) dans laquelle la quantité de carboxylation dans la RDP est comprise dans la gamme allant de 0,1 % en poids jusqu'à 2,75 % en poids, rapporté au poids total de la RDP, la méthode comprenant le fait de sécher un mélange aqueux d'un polymère filmogène insoluble dans l'eau et d'un stabilisant colloïdal pour obtenir une poudre de polymère redispersable dans l'eau, dans laquelle le polymère filmogène a une température de transition vitreuse (point médian Tg - tel que mesuré par calorimétrie différentielle à balayage en utilisant une vitesse de chauffage de 10 °C par minute) allant de -20 °C à 30 °C et une taille moyenne de particules allant de 2 000 Å à 5 000 Å (telle que déterminée par diffusion de lumière laser), et est le produit de copolymérisation d'un mélange de monomères comprenant a) de 20 à 79,9 % en poids de styrène, b) 79,9 % en poids de moins de 1,3-butadiène, c) 0,1 % en poids à 2,75 % en poids d'au moins un acide dicarboxylique éthyléniquement insaturé, un anhydride et/ou un sel de celui-ci, et facultativement d) jusqu'à 76 % en poids d'un comonomère, rapporté au poids du polymère filmogène insoluble dans l'eau.

7. Une méthode pour produire une poudre de polymère redispersable dans l'eau telle que revendiquée dans la revendication 6 dans laquelle le polymère filmogène insoluble dans l'eau a une taille moyenne de particules allant de 2 100 Å à 3 900 Å, une température de transition vitreuse (Tg) inférieure à 28 °C, et comprend 0,5 à 2,5 % en poids d'acide itaconique et/ou d'acide maléique copolymérisés.

8. Une méthode pour produire une poudre de polymère redispersable dans l'eau telle que revendiquée dans la revendication 6 dans laquelle le polymère filmogène insoluble dans l'eau est un copolymère formé à partir d'un mélange de monomères comprenant les monomères styrène, butadiène, acide itaconique, et acrylonitrile, et
dans laquelle le stabilisant colloïdal comprend un alcool polyvinylique dans une quantité d'au moins 1 % en poids, rapporté au poids du polymère filmogène insoluble dans l'eau.

9. Une méthode pour réaliser une composition de ciment comprenant le fait de mélanger ensemble des ingrédients de ciment avec une poudre de polymère redispersable dans l'eau telle que revendiquée dans la revendication 1.
